(19) Europäisches Patentamt / European Patent Office / Office européen des brevets

(11) **EP 4 170 689 B1**

(12) **EUROPEAN PATENT SPECIFICATION**

(45) Date of publication and mention
of the grant of the patent:
**11.09.2024 Bulletin 2024/37**

(21) Application number: **20944728.3**

(22) Date of filing: **06.07.2020**

(51) International Patent Classification (IPC):
$H01F\ 38/00^{(2006.01)}$      $H01F\ 3/10^{(2006.01)}$
$H01F\ 3/14^{(2006.01)}$

(52) Cooperative Patent Classification (CPC):
**H01F 38/00; H01F 3/10; H01F 3/14;**
H01F 2038/006

(86) International application number:
**PCT/CN2020/100333**

(87) International publication number:
**WO 2022/006691 (13.01.2022 Gazette 2022/02)**

(54) **MATRIX TRANSFORMER, POWER CONVERTER, AND METHOD FOR ARRANGING MATRIX TRANSFORMER WINDINGS**

MATRIXTRANSFORMATOR, STROMWANDLER UND VERFAHREN ZUR ANORDNUNG VON MATRIXTRANSFORMATORWICKLUNGEN

TRANSFORMATEUR MATRICIEL, CONVERTISSEUR DE PUISSANCE ET PROCÉDÉ D'AGENCEMENT D'ENROULEMENTS DE TRANSFORMATEUR MATRICIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.04.2023 Bulletin 2023/17**

(73) Proprietor: **Huawei Digital Power Technologies Co., Ltd.**
**Shenzhen, Guangdong 518043 (CN)**

(72) Inventors:
• **YANG, Zezhou**
**Shenzhen, Guangdong 518129 (CN)**
• **YI, Liqiong**
**Shenzhen, Guangdong 518129 (CN)**
• **ZHONG, Shu**
**Shenzhen, Guangdong 518129 (CN)**
• **CHEN, Baoguo**
**Shenzhen, Guangdong 518129 (CN)**

• **HU, Xiaolu**
**Shenzhen, Guangdong 518129 (CN)**

(74) Representative: **Epping - Hermann - Fischer Patentanwaltsgesellschaft mbH**
**Schloßschmidstraße 5**
**80639 München (DE)**

(56) References cited:
**CN-A- 105 185 526**     **CN-A- 105 185 526**
**CN-A- 109 841 398**     **CN-A- 110 581 003**
**CN-U- 201 489 966**     **US-A1- 2019 355 506**

• **LI BIN ET AL: "A High-Efficiency High-Density Wide-Bandgap Device-Based Bidirectional On-Board Charger", IEEE JOURNAL OF EMERGING AND SELECTED TOPICS IN POWER ELECTRONICS, vol. 6, no. 3, 1 September 2018 (2018-09-01), pages 1627 - 1636, XP011688293, ISSN: 2168-6777, [retrieved on 20180807], DOI: 10.1109/JESTPE.2018.2845846**

**Description**

**TECHNICAL FIELD**

This application relates to the transformer field, and in particular, to a matrix transformer, a power converter, and a matrix transformer winding arrangement method.

**BACKGROUND**

A transformer is a basic component in a circuit, and implements voltage conversion and isolation functions. With rapid development of power electronics technologies, high-frequency application of the transformer has shown an obvious trend. In a high-frequency scenario, a winding loss of a conventional transformer greatly increases due to impact of a proximity effect. However, for a matrix transformer, windings are distributed to a plurality of sub-transformers, thereby reducing negative impact caused by a winding proximity effect and improving a loss characteristic.

The matrix transformer is a high-frequency transformer, and usually includes a plurality of magnetic core columns. Each magnetic core column is wound with a first winding and a second winding. Each magnetic core column and the windings wound around the magnetic core column constitute a sub-transformer. Usually, first windings of the sub-transformers correspondingly constitute a high-voltage-side winding of the matrix transformer, and second windings of the sub-transformers correspondingly constitute a low-voltage-side winding of the matrix transformer. Equal power and volume division among the sub-transformers of the matrix transformer is helpful to achieve balance in terms of magnetic flux density, current density, heat emission amount, temperature, and the like. Currently, to keep equal power and volume division among the sub-transformers, the sub-transformers are required to be consistent in a winding turn quantity. Assuming that a matrix transformer includes a total of n sub-transformers (n is an integer greater than 1), and a turn quantity of a first winding of each sub-transformer is a positive integer N1, a total turn quantity of a high-voltage-side winding of the matrix transformer is n*N1. It can be learned from this quantity relationship that, at present, a total turn quantity of a high-voltage-side winding of a matrix transformer needs to be an integer multiple of a sub-transformer quantity.

However, when a ratio of a turn quantity design value of a high-voltage-side winding to a sub-transformer quantity is not an integer, it is difficult to equally divide the turn quantity design value among all sub-transformers. In this case, a total quantity of actually wound turns of the high-voltage-side winding usually needs to be slightly adjusted based on the turn quantity design value of the high-voltage-side winding, so that the total quantity of actually wound turns of the high-voltage-side winding can be equally divided among all the sub-transformers. For example, a matrix transformer includes four sub-transformers, a turn quantity design value of a high-voltage-side winding is 11, and a magnetic core column of each of the four sub-transformers is wound with a 3-turn first winding, to finally implement a high-voltage-side winding whose total turn quantity is 12 (4*3). The foregoing manner of adjusting a total turn quantity of a high-voltage-side winding based on a turn quantity design value implements equal turn quantity division, but the matrix transformer is not ideal in terms of efficiency, voltage adjustment range, and the like.

A matrix transformer with unbalanced windings compensated by gaps is known from LI BIN ET AL: "A High-Efficiency High-Density Wide-Bandgap Device-Based Bidirectional On-Board Charger", IEEE JOURNAL OF EMERGING AND SELECTED TOPICS IN POWER ELECTRONICS, vol. 6, no. 3, 2018-09-01, pages 1627-1636.

**SUMMARY**

This application provides a matrix transformer, a power converter, and a matrix transformer winding arrangement method, to ensure normal use performance of the matrix transformer when a ratio of a turn quantity design value of a high-voltage-side winding of the matrix transformer to a sub-transformer quantity is not an integer.

A first aspect of this application provides a matrix transformer. The matrix transformer includes n sub-transformers, where n is an integer greater than 1, each of magnetic core columns of the n sub-transformers is wound with a first winding and a second winding, first windings are connected in series to form a high-voltage-side winding of the matrix transformer, and second windings are connected in parallel to form a low-voltage-side winding of the matrix transformer. A sum of turn quantities of the first windings of the n sub-transformers is equal to a turn quantity design value of the high-voltage-side winding, and a ratio of the turn quantity design value to n is not an integer. A magnetic inductance ratio of the first windings of the n sub-transformers is equal to a turn quantity ratio of the first windings of the n sub-transformers.

Because the high-voltage-side winding is formed by connecting, in series, the first windings wound around the magnetic core columns of the n sub-transformers of the matrix transformer, a quantity of actually wound turns of the high-voltage-side winding matches the design value, and therefore does not need to be up-adjusted or down-adjusted based on the turn quantity design value to evenly divide a total turn quantity among the magnetic core columns of the n sub-transformers. Further, efficiency and a voltage adjustment range of the matrix transformer do not need to be sacrificed, so that the matrix transformer has better operating performance.

With reference to the first aspect, in a first implementation, air gaps are disposed in the magnetic core columns of the n sub-transformers, so that the magnetic inductance ratio of the first windings of the n sub-transformers is equal to the turn quantity ratio of the first windings of the n sub-transformers. In this way, the second windings of the magnetic core columns of the n sub-transformers can be directly connected in parallel for use. The air gap is disposed in the magnetic core column, thereby improving controllability of a relative magnitude of a magnetic inductance of the first winding.

With reference to the first aspect, in a second implementation, a turn quantity of a first winding of at least one of the n sub-transformers is unequal to turn quantities of first windings of the other sub-transformers. For example, if the turn quantity design value of the high-voltage-side winding is 11, and n=4, magnetic core columns of four sub-transformers may be respectively wound with a 3-turn first winding, a 3-turn first winding, a 3-turn first winding, and a 2-turn first winding, or magnetic core columns of four sub-transformers may be respectively wound with a 1-tum first winding, a 2-turn first winding, a 3-turn first winding, and a 5-turn first winding.

With reference to the second implementation of the first aspect, a difference between a first winding with a largest turn quantity and a first winding with a smallest turn quantity in the n sub-transformers is 1 turn.

With reference to the first implementation of the first aspect, cross-sectional areas of the magnetic core columns of the n sub-transformers are equal, materials of the magnetic core columns are the same, and an air gap disposed in a magnetic core column of at least one of the n sub-transformers is different from air gaps disposed in magnetic core columns of the other sub-transformers. In this implementation, because the cross-sectional areas of the magnetic core columns of the n sub-transformers are equal and the materials of the magnetic core columns are the same, the disposed air gap is used as a main controllable parameter for controlling the magnetic inductance of the first winding. To ensure that the magnetic inductance ratio of the first windings of the n sub-transformers is equal to the turn quantity ratio of the first windings of the n sub-transformers, the air gaps disposed in the magnetic core columns of the sub-transformers are not completely the same or are completely different.

With reference to any one of the first aspect or the foregoing implementations of the first aspect, each of the first windings of the n sub-transformers includes a first pin and a second pin, and each of the second windings of the n sub-transformers include a third pin and a fourth pin. First pins and second pins are connected to an external circuit to establish a serial relationship of the first windings, and third pins and fourth pins are connected to the external circuit to establish a parallel relationship of the second windings.

With reference to any one of the first aspect or the foregoing implementations of the first aspect, the first windings of the n sub-transformers are directly connected in series, the high-voltage-side winding includes a total of two pins, each of the second windings of the n sub-transformers includes a third pin and a fourth pin, and third pins and fourth pins are connected to an external circuit to establish a parallel relationship of the second windings.

A second aspect of this application provides a matrix transformer. The matrix transformer includes n sub-transformers, where n is an integer greater than 1, each of magnetic core columns of the n sub-transformers is wound with a second winding and an n-layer first winding. $x^{th}$-layer first windings of the n sub-transformers are connected in series to form an $x^{th}$-layer high-voltage-side sub-winding, x is any integer in an interval [1, n], a first-layer high-voltage-side sub-winding to an $n^{th}$-layer high-voltage-side sub-winding are connected in parallel to form a high-voltage-side winding of the matrix transformer, and second windings of the n sub-transformers are connected in parallel to form a low-voltage-side winding of the matrix transformer. A turn quantity of the $x^{th}$-layer high-voltage-side sub-winding is equal to a turn quantity design value of the high-voltage-side winding, a sum of turn quantities of first windings of n layers of an $i^{th}$ sub-transformer in the n sub-transformers is equal to the turn quantity design value of the high-voltage-side winding, i is any integer in the interval [1, n], and a ratio of the turn quantity design value to n is not an integer.

A turn quantity of a high-voltage-side sub-winding of each layer is enabled to be equal to the turn quantity design value of the high-voltage-side winding, and high-voltage-side sub-windings of all layers are enabled to be connected in parallel, so that a total quantity of actually wound turns of the high-voltage-side winding matches the turn quantity design value. The total turn quantity does not need to be up-adjusted or down-adjusted based on the turn quantity design value to evenly divide the total turn quantity among the magnetic core columns of the n sub-transformers. Further, efficiency and a voltage adjustment range of the matrix transformer do not need to be sacrificed, so that the matrix transformer has better operating performance.

With reference to the second aspect, in a first implementation, no air gaps are disposed in the magnetic core columns of the n sub-transformers, cross-sectional areas of the magnetic core columns are equal, and materials of the magnetic core columns are the same, so that the magnetic core columns of the n sub-transformers have a same magnetic flux; or air gaps are disposed in the magnetic core columns of the n sub-transformers, so that the magnetic core columns of the n sub-transformers have a same magnetic flux. Because the magnetic core columns of the n sub-transformers have a same magnetic flux, the second windings can be directly connected in parallel for use, and the matrix transformer normally works according to a pre-designed transformer ratio.

With reference to the second aspect, in a second implementation, a turn quantity of a first winding of at least one layer of the $i^{th}$ sub-transformer is unequal to turn quantities of first windings of the other layers. For example, n=4, and turn quantities of a first-layer first winding to a fourth-layer first winding of the first sub-transformer are respectively 3, 3, 3, and 2. A turn quantity of an $x^{th}$-layer first winding of at least one of the n sub-transformers is unequal to turn quantities of $x^{th}$-layer first windings of the other sub-transformers. For example, n=4, and turn quantities of first-layer first windings of the first sub-transformer to the fourth sub-transformer are respectively 3, 3, 3, and 2.

With reference to the second implementation of the second aspect, a difference between a first winding of a layer with a largest turn quantity and a first winding of a layer with a smallest turn quantity in the $i^{th}$ sub-transformer is 1 turn, and a difference between an $x^{th}$-layer first winding with a largest turn quantity and an $x^{th}$-layer first winding with a smallest turn quantity in the n $x^{th}$-layer first windings connected in series to form the $x^{th}$-layer high-voltage-side sub-winding is 1 turn.

Optionally, a smallest first-winding turn quantity or a largest first-winding turn quantity is rotated among the first-layer high-voltage-side sub-winding to the $n^{th}$-layer high-voltage-side sub-winding and the first sub-transformer to an $n^{th}$ sub-transformer, and a rotation manner is any one of the following: orderly rotation, reverse-order rotation, or disorderly rotation.

With reference to any one of the second aspect or the foregoing implementations of the second aspect, a two-layer first winding and a second winding of the $i^{th}$ sub-transformer are wound around a magnetic core column in a sandwich winding manner; or a second winding of the $i^{th}$ transformer is wound on an innermost side or an outermost side of an n-layer first winding.

With reference to any one of the second aspect or the foregoing implementations of the second aspect, first ends of the first-layer high-voltage-side sub-winding to the $n^{th}$-layer high-voltage-side sub-winding are connected to form a first pin of the high-voltage-side winding, and second ends of the first-layer high-voltage-side sub-winding to the $n^{th}$-layer high-voltage-side sub-winding are connected to form a second pin of the high-voltage-side winding. Optionally, the $x^{th}$-layer high-voltage-side sub-winding is continuously wired across different sub-transformers.

With reference to any one of the first aspect or the foregoing implementations of the first aspect or any one of the second aspect or the foregoing implementations of the second aspect, the first winding and the second winding each are made of any one of the following wire materials: a Litz wire, a printed circuit board, an enameled copper wire, copper foil, or a flexible flat cable.

A third aspect of this application provides a matrix transformer winding arrangement method. The arrangement method includes:

 obtaining a turn quantity design value of a high-voltage-side winding of a matrix transformer, where the matrix transformer includes n sub-transformers, and n is an integer greater than 1;
 when determining that a ratio of the turn quantity design value to n is not an integer, separately arranging first windings on magnetic core columns of the n sub-transformers based on the turn quantity design value to enable a sum of turn quantities of the first windings of the n sub-transformers to be equal to the turn quantity design value, and separately winding second windings around the magnetic core columns of all the sub-transformers; and connecting the first windings of the n sub-transformers in series to form the high-voltage-side winding, and connecting the second windings of the n sub-transformers in parallel to form a low-voltage-side winding of the matrix transformer; and
 controlling a magnetic inductance ratio of the first windings of the n sub-transformers to be equal to a turn quantity ratio of the first windings of the n sub-transformers.

With reference to the third aspect, in a first implementation, the controlling a magnetic inductance ratio of the first windings of the n sub-transformers to be equal to a turn quantity ratio of the first windings of the n sub-transformers specifically includes:

disposing air gaps in the magnetic core columns of the n sub-transformers to control the magnetic inductance ratio of the first windings of the n sub-transformers to be equal to the turn quantity ratio of the first windings of the n sub-transformers.

A fourth aspect of this application provides a matrix transformer winding arrangement method. The arrangement method includes:

 obtaining a turn quantity design value of a high-voltage-side winding of a matrix transformer, where the matrix transformer includes n sub-transformers, and n is an integer greater than 1;
 when determining that a ratio of the turn quantity design value to n is not an integer, arranging an n-layer first winding around a magnetic core column of an $i^{th}$ sub-transformer in the n sub-transformers according to a first constraint condition and a second constraint condition, and separately winding second windings around magnetic core columns of all the sub-transformers, where i is any integer in an interval [1, n];

connecting $x^{th}$-layer first windings of the n sub-transformers in series to form an $x^{th}$-layer high-voltage-side subwinding, where x is any integer in the range [1, n]; and

connecting a first-layer high-voltage-side sub-winding to an $n^{th}$-layer high-voltage-side sub-winding in parallel to form the high-voltage-side winding of the matrix transformer, and connecting the second windings of the n subtransformers in parallel to form a low-voltage-side winding of the matrix transformer, where

the first constraint condition includes that a turn quantity of the $x^{th}$-layer high-voltage-side sub-winding is equal to the turn quantity design value; and

the second constraint condition includes that a sum of turn quantities of first windings of n layers of the $i^{th}$ subtransformer in the n sub-transformers is equal to the turn quantity design value.

With reference to the fourth aspect, in a first implementation, a difference between a first winding of a layer with a largest turn quantity and a first winding of a layer with a smallest turn quantity in the $i^{th}$ sub-transformer is 1 turn, and a difference between an $x^{th}$-layer first winding with a largest turn quantity and an $x^{th}$-layer first winding with a smallest turn quantity in the n $x^{th}$-layer first windings connected in series to form the $x^{th}$-layer high-voltage-side sub-winding is 1 turn.

The arranging an n-layer first winding around a magnetic core column of an $i^{th}$ sub-transformer in the n subtransformers according to a first constraint condition and a second constraint condition specifically includes:

arranging the n-layer first winding on the magnetic core column of the $i^{th}$ sub-transformer in the n sub-transformers according to the first constraint condition and the second constraint condition, and rotating a smallest first-winding turn quantity or a largest first-winding turn quantity among the first-layer high-voltage-side sub-winding to the $n^{th}$-layer highvoltage-side sub-winding and the first sub-transformer to an $n^{th}$ sub-transformer, where a rotation manner is any one of the following: orderly rotation, reverse-order rotation, or disorderly rotation.

It can be learned from the foregoing technical solutions that embodiments of this application have the following advantages:

According to the matrix transformer provided in the first aspect of this application, each of the magnetic core columns of the n sub-transformers is wound with the first winding and the second winding, the first windings are connected in series to form the high-voltage-side winding of the matrix transformer, and the second windings are connected in parallel to form the low-voltage-side winding of the matrix transformer. Although the ratio of the turn quantity design value of the high-voltage-side winding to the sub-transformer quantity n is not an integer, the sum of the turn quantities of the first windings of the n sub-transformers is equal to the turn quantity design value of the high-voltage-side winding. Because the high-voltage-side winding is formed by connecting the first windings of the n sub-transformers in series, the total quantity of actually wound turns of the high-voltage-side winding matches the turn quantity design value, and the efficiency and the voltage adjustment range of the matrix transformer do not need to be sacrificed. The magnetic inductance ratio of the first windings of the n sub-transformers is equal to the turn quantity ratio of the first windings of the n subtransformers, thereby ensuring that a ratio of voltages obtained by the first windings of the n sub-transformers through division is equal to the turn quantity ratio of the first windings of the n sub-transformers.

Under a condition that magnetic fluxes of the magnetic core columns of the n sub-transformers are equal and turn quantities of the second windings are equal, voltages corresponding to the second windings are equal, so that the second windings can be directly connected in parallel for use. In this way, normal use performance of the matrix transformer is ensured.

According to the matrix transformer provided in the second aspect of this application, each of the magnetic core columns of the n sub-transformers is wound with the second winding and the n-layer first winding. The $x^{th}$-layer (x is any integer in the interval [1, n]) first windings of the n sub-transformers are connected in series to form the $x^{th}$-layer high-voltage-side sub-winding, the first-layer high-voltage-side sub-winding to the $n^{th}$-layer high-voltage-side sub-winding are connected in parallel to form the high-voltage-side winding of the matrix transformer, and the second windings of the n sub-transformers are connected in parallel to form the low-voltage-side winding of the matrix transformer. Although the ratio of the turn quantity design value of the high-voltage-side winding to the sub-transformer quantity n is not an integer, the turn quantity of the high-voltage-side sub-winding of each layer is enabled to be equal to the turn quantity design value of the high-voltage-side winding, and the high-voltage-side sub-windings of all the layers are enabled to be connected in parallel, so that the total quantity of actually wound turns of the high-voltage-side winding matches the turn quantity design value, and the efficiency and the voltage adjustment range of the matrix transformer do not need to be sacrificed. Because a sum of turn quantities of first windings of n layers of each sub-transformer is equal to the turn quantity design value of the high-voltage-side winding, all the magnetic core columns have a same magnetic flux. Under a condition that turn quantities of the second windings of the n sub-transformers are equal, voltages corresponding to the second windings are equal, so that the second windings can be directly connected in parallel for use. In this way, normal use performance of the matrix transformer is ensured.

## BRIEF DESCRIPTION OF DRAWINGS

FIG. 1 is a schematic diagram of a winding arrangement manner of a matrix transformer having four sub-transformers according to an embodiment of this application;
FIG. 2 is a schematic diagram of a winding arrangement manner of a matrix transformer having three sub-transformers according to an embodiment of this application;
FIG. 3 is a schematic diagram of a winding arrangement manner of a matrix transformer having two sub-transformers according to an embodiment of this application;
FIG. 4 is a schematic diagram of a winding arrangement manner of another matrix transformer having two sub-transformers according to an embodiment of this application;
FIG. 5 is a schematic diagram of a winding arrangement manner of another matrix transformer having three sub-transformers according to an embodiment of this application;
FIG. 6 is a flowchart of a matrix transformer winding arrangement method according to an embodiment of this application; and
FIG. 7 is a flowchart of another matrix transformer winding arrangement method according to an embodiment of this application.

## DESCRIPTION OF EMBODIMENTS

Currently, for a common matrix transformer, sub-transformers are consistent in a winding turn quantity, and a total turn quantity of a high-voltage-side winding is an integer multiple of a sub-transformer quantity. However, when a ratio of a turn quantity design value of the high-voltage-side winding to the sub-transformer quantity is not an integer, a total quantity of actually wound turns of the high-voltage-side winding usually needs to be slightly adjusted based on the turn quantity design value of the high-voltage-side winding, so that the total turn quantity can be evenly divided among all the sub-transformers. In this way, a transformer ratio of the matrix transformer deviates from an ideal design value.

For example, if a transformer ratio of a matrix transformer in an LLC resonant converter is not an ideal design value, it is necessary to rely on a controller to increase a switching frequency of a semiconductor switching transistor, to introduce a larger reactive cross current to adjust the transformer ratio. In this way, a loss and a heat emission amount of the converter increase. In addition, the controller can implement a limited adjustment range, and when a part of the adjustment range is used to compensate for a difference between the transformer ratio and the ideal design value, an adjustment amount that can be used to adjust an output voltage range is reduced. Therefore, it can be learned that this even-division winding arrangement manner of the matrix transformer affects performance of the matrix transformer in terms of efficiency, voltage regulation range, and the like.

To ensure normal use performance of a matrix transformer when a ratio of a design value of a high-voltage-side winding of the matrix transformer to a sub-transformer quantity is not an integer, this application provides a matrix transformer, a power converter, and a matrix transformer winding arrangement method. The foregoing problem is resolved by arranging windings with unequal turn quantities on different sub-transformers or arranging windings on sub-transformers in layers. For ease of understanding, the following describes in detail implementations of the technical solutions of this application with reference to the embodiments and the accompanying drawings.

In a possible implementation, a matrix transformer in an embodiment of this application includes n sub-transformers, where n is an integer greater than 1. Each of magnetic core columns of the n sub-transformers is wound with a first winding and a second winding. First windings are connected in series to form a high-voltage-side winding of the matrix transformer, and second windings are connected in parallel to form a low-voltage-side winding of the matrix transformer.

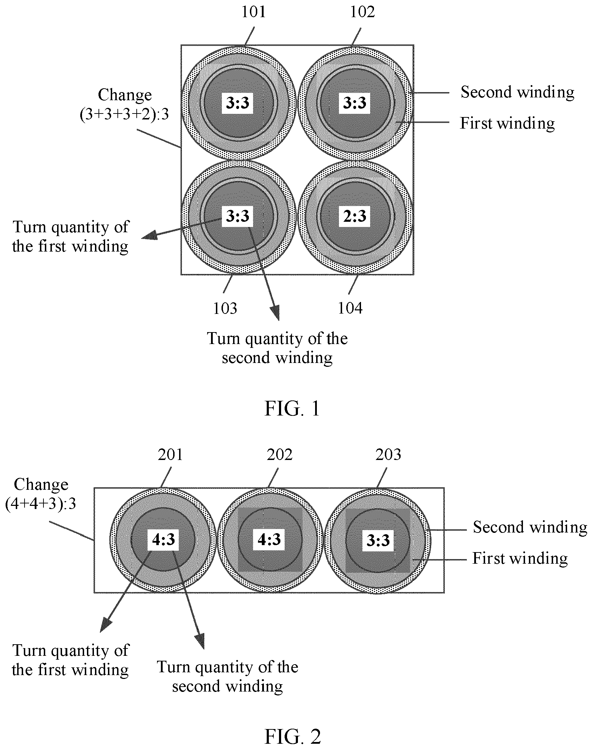

A sum of turn quantities of the first windings of the n sub-transformers is equal to a turn quantity design value of the high-voltage-side winding, and a ratio of the turn quantity design value to n is not an integer. In this embodiment of this application, a case in which the turn quantity design value is equal to n is excluded. Assuming that the turn quantity design value of the high-voltage-side winding is 11, FIG. 1 to FIG. 3 respectively show winding arrangement manners of matrix transformers having four sub-transformers, three sub-transformers, and two sub-transformers.

As shown in FIG. 1, in a matrix transformer, 3-turn first windings are separately wound in sub-transformers 101 to 103, and a 2-turn first winding is wound in a sub-transformer 104. In this embodiment of this application, because the first windings wound in the sub-transformers are connected in series to form the high-voltage-side winding of the matrix transformer, a quantity of actually wound turns of the high-voltage-side winding is 11.

As shown in FIG. 2, in a matrix transformer, 4-turn first windings are separately wound in sub-transformers 201 and 202, and a 3-turn first winding is wound in a sub-transformer 203. A quantity of actually wound turns of the high-voltage-side winding is 11.

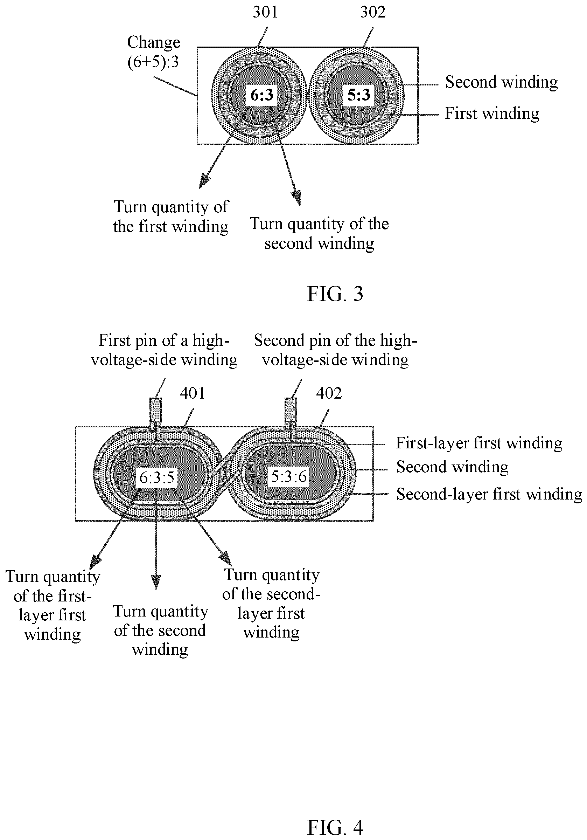

As shown in FIG. 3, in a matrix transformer, a 6-turn first winding is wound in a sub-transformer 301, and a 5-turn first winding is wound in a sub-transformer 302. A quantity of actually wound turns of the high-voltage-side winding is 11.

In the winding arrangement manners shown in FIG. 1 to FIG. 3, a turn quantity of a first winding of at least one sub-transformer is unequal to turn quantities of first windings of the other sub-transformers. In addition, a difference between a first winding with a largest turn quantity and a first winding with a smallest turn quantity in the n sub-transformers of the matrix transformer is 1 turn. In another possible implementation, a difference between a first winding with a largest turn quantity and a first winding with a smallest turn quantity may be greater than 1 turn. For example, n=3, the turn quantity design value is 11, and a 5-turn first winding, a 5-turn first winding, and a 1-tum first winding are respectively wound in the sub-transformers 201 to 203 shown in FIG. 2.

In the schematic winding arrangement diagrams shown in FIG. 1 and FIG. 2, turn quantities of first windings wound in only some sub-transformers are different from turn quantities of first windings wound in the other sub-transformers. In actual application, turn quantities of the first windings wound in the n sub-transformers may be alternatively set to be different from each other. For example, n=4, the turn quantity design value is 11, and a 1-tum first winding, a 2-turn first winding, a 3-turn first winding, and a 5-turn first winding are respectively wound in the sub-transformers 101 to 104 shown in FIG. 1.

In this embodiment of this application, a turn quantity of the second winding wound in the sub-transformer of the matrix transformer is not limited, and the second winding may be specifically wound based on a transformer ratio design value. For example, the turn quantity design value of the high-voltage-side winding is 11, and if the transformer ratio design value of the matrix transformer is 11:3, 3-turn second windings may be separately wound in the n sub-transformers.

With reference to the foregoing descriptions and the winding arrangement examples provided in FIG. 1 to FIG. 3, it can be learned that in this embodiment of this application, first windings with unequal turn quantities are arranged in different sub-transformers, so that a total quantity of actually wound turns of the high-voltage-side winding matches the turn quantity design value, and efficiency and a voltage adjustment range of the matrix transformer do not need to be sacrificed.

Magnetic inductances of the first windings of the n sub-transformers of the matrix transformer are represented as $L1, L2, ..., $ and $Ln$, and the turn quantities of the first windings of the n sub-transformers are represented as $Vp1, Vp2, ..., $ and $Vpn$. In the matrix transformer provided in this embodiment of this application, a magnetic inductance ratio of the first windings of the n sub-transformers is equal to a turn quantity ratio of the first windings of the n sub-transformers, that is, $L1:L2:...:Ln=Vp1:Vp2:...:Vpn$. For example, in the first-winding arrangement manner of the four sub-transformers 101 to 104 shown in FIG. 1, a magnetic inductance ratio of the sub-transformers 101 to 104 is 3:3:3:2. In this embodiment of this application, the magnetic inductance ratio of the first windings of the n sub-transformers is equal to the turn quantity ratio of the first windings of the n sub-transformers, thereby ensuring that a ratio of voltages obtained by the first windings of the n sub-transformers through division is equal to the turn quantity ratio of the first windings of the n sub-transformers. Under a condition that magnetic fluxes of the magnetic core columns of the n sub-transformers are equal and turn quantities of the second windings are equal, voltages corresponding to the second windings are equal, so that the second windings can be directly connected in parallel for use. In this way, normal use performance of the matrix transformer is ensured.

In the foregoing embodiment, as a possible implementation, air gaps are disposed in the magnetic core columns of the n sub-transformers of the matrix transformer. After the first winding and the second winding are wound around each of the magnetic core columns of the n sub-transformers of the matrix transformer, the magnetic inductances of the first windings of the n sub-transformers may be measured while the air gaps are ground for the magnetic core columns. The air gap grinding operation can be stopped when the magnetic inductance ratio of the first windings of the n sub-transformers is equal to the turn quantity ratio of the first windings of the n sub-transformers. In this implementation, the air gaps are disposed for the magnetic core columns to ensure that the condition that $L1:L2:...:Ln=Vp1:Vp2:...:Vpn$ is met.

In an implementation scenario, cross-sectional areas of the magnetic core columns of the n sub-transformers of the matrix transformer are equal and materials of the magnetic core columns are the same. Because the turn quantities of the first windings of the n sub-transformers are not completely the same or are completely different, to ensure that the condition that $L1:L2:...:Ln=Vp1:Vp2:...:Vpn$ is met, when the air gaps are disposed, an air gap disposed in a magnetic core column of at least one sub-transformer needs to be enabled to be different from air gaps disposed in magnetic core columns of the other sub-transformers. For example, in the first-winding arrangement manner of the four sub-transformers 101 to 104 shown in FIG. 1, air gaps disposed in magnetic core columns of the sub-transformers 101 to 103 are different from an air gap disposed in a magnetic core column of the sub-transformer 104. Herein, that air gaps are different may be specifically that the air gaps have different parameters such as widths and depths.

In another implementation scenario, if cross-sectional areas of the magnetic core columns of the n sub-transformers of the matrix transformer are unequal and/or materials of the magnetic core columns are different, same air gaps may be disposed for the magnetic core columns of the n transformers. This can also ensure that the condition that L1:L2:...:Ln=Vp1:Vp2:...:Vpn is met. Therefore, as another possible manner, same air gaps or no air gaps are disposed for the magnetic core columns, and cross-sectional areas of the magnetic core columns of the n sub-transformers of the matrix transformer are designed to be unequal, to ensure that the condition that L1:L2:...:Ln=Vp1:Vp2:...:Vpn is met after the first windings are arranged in the foregoing manner.

In the matrix transformer provided in the foregoing embodiment, the windings wound around the magnetic core columns of the n sub-transformers may be connected in a plurality of different connection manners.

Connection manner of the first windings:

In a possible connection manner, each of the first windings of the n sub-transformers includes a first pin and a second pin, and first pins and second pins are connected to an external circuit to establish a serial relationship of the first windings to form the high-voltage-side winding. As an example, the external circuit is implemented by using a printed circuit board (Printed Circuit Board, PCB) or a copper bar.

In another possible connection manner, the first windings of the n sub-transformers are directly connected in series, and the high-voltage-side winding includes a total of two pins. For example, for the sub-transformers 201 to 203 shown in FIG. 2, a first end of the sub-transformer 201 is used as one pin of the high-voltage-side winding, a second end of the sub-transformer 201 is directly connected to a first end of the sub-transformer 202, a second end of the sub-transformer 202 is directly connected to a first end of the sub-transformer 203, and a second end of the sub-transformer 203 is used as the other pin of the high-voltage-side winding. Neither the first pin nor the second pin is shown in the figure.

Connection manner of the second windings:

In a possible connection manner, each of the second windings of the n sub-transformers includes a third pin and a fourth pin, and third pins and fourth pins are connected to the external circuit to establish a parallel relationship of the second windings. As an example, the external circuit is implemented by using a PCB or a copper bar. For example, for the sub-transformers 301 and 302 shown in FIG. 3, a third pin of the sub-transformer 301 and a third pin of the sub-transformer 302 are connected by using a first copper wire on a PCB, and a fourth pin of the sub-transformer 301 and a fourth pin of the sub-transformer 302 are connected by using a second copper wire on the PCB. Electronic components such as a resistor and a semiconductor rectifier bridge may be connected between the first copper wire and the second copper wire. Neither the third pin nor the fourth pin is shown in the figure.

Because a high-frequency alternating current flows out of the second winding, an electronic power converter (for example, a rectifier) may be used to convert the alternating current into a direct current in actual application. For example, the second windings of the n sub-transformers are connected in parallel and then connected to one rectifier, and the rectifier outputs one direct current. In addition, alternatively, the second windings of the n sub-transformers may be separately connected to different rectifiers, and output ends of the rectifiers are connected in parallel, to output one direct current. If the used electronic power converter is specifically a full-wave rectifier, it is required that three pins should be disposed on a second winding of each sub-transformer.

In another possible implementation, a matrix transformer in an embodiment of this application includes n sub-transformers, where n is an integer greater than 1. Each of magnetic core columns of the n sub-transformers is arranged with a second winding and an n-layer first winding. $x^{th}$-layer first windings of the n sub-transformers are connected in series to form an $x^{th}$-layer high-voltage-side sub-winding, x is any integer in an interval [1, n]. A first-layer high-voltage-side sub-winding to an $n^{th}$-layer high-voltage-side sub-winding are connected in parallel to form a high-voltage-side winding of the matrix transformer. Second windings of the n sub-transformers are connected in parallel to form a low-voltage-side winding of the matrix transformer.

In this embodiment, a turn quantity of the $x^{th}$-layer high-voltage-side sub-winding is equal to a turn quantity design value of the high-voltage-side winding. A ratio of the turn quantity design value to n is not an integer. Because the $x^{th}$-layer high-voltage-side sub-winding is formed by connecting the $x^{th}$-layer first windings of the n sub-transformers in series, according to the above description, the turn quantity Np-x of the $x^{th}$-layer high-voltage-side sub-winding may be represented as follows:

$$Np{-}x = Np1{-}x + Np2{-}x + \ldots + Npn{-}x = Np \qquad \text{Formula (1)}$$

In the formula (1), Np1-x, Np2-x, ..., and Npn-x respectively represent turn quantities of the $x^{th}$-layer first windings of the first sub-transformer to an $n^{th}$ sub-transformer. Np represents the turn quantity design value of the high-voltage-side winding of the matrix transformer.

In addition, a sum Npi of turn quantities of first windings of n layers of an $i^{th}$ sub-transformer (i is any integer in the interval [1, n]) in the n sub-transformers of the matrix transformer in this embodiment is equal to the turn quantity design value of the high-voltage-side winding. This relationship may be represented by using the following formula:

$$Npi=Npi{-}1+Npi{-}2+\ldots+Npi{-}n=Np \qquad\qquad \text{Formula (2)}$$

In the formula (2), Npi-1, Npi-2, ..., and Npi-n respectively represent turn quantities of a first-layer first winding to an $n^{th}$-layer first winding of the $i^{th}$ sub-transformer. A meaning of Np is the same as that in the formula (1).

It should be noted that although an n-layer first winding is wound around a magnetic core column of the $i^{th}$ sub-transformer, the first-layer first winding to the $n^{th}$-layer first winding of the independent $i^{th}$ sub-transformer are not in a direct serial connection relationship. An $x^{th}$-layer first winding of the $i^{th}$ sub-transformer needs to be connected to $x^{th}$-layer first windings of the other sub-transformers in series to further form the $x^{th}$-layer high-voltage-side sub-winding, and the $x^{th}$-layer first windings that are connected in series form one line. For a condition that the connection relationship needs to meet, specifically refer to the formula (1). In this embodiment of this application, the first-layer high-voltage-side sub-winding to the $n^{th}$-layer high-voltage-side sub-winding are connected in parallel to form the high-voltage-side winding of the matrix transformer. It is equivalent that n lines representing high-voltage-side sub-windings of different layers are connected together in parallel.

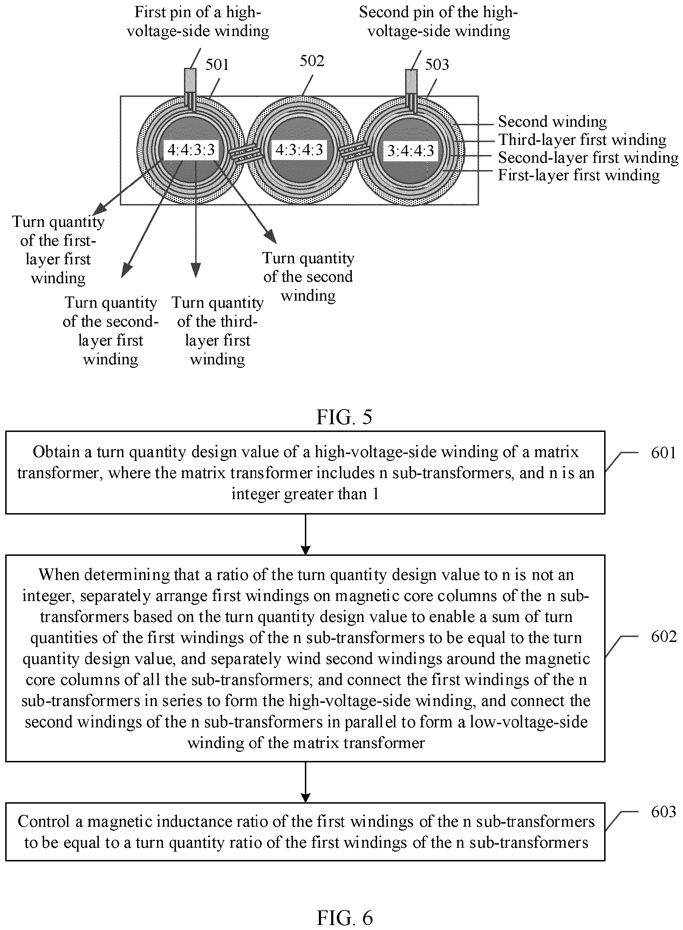

For ease of understanding a winding arrangement manner of the matrix transformer in this embodiment, the following separately describes the winding arrangement manner with reference to examples in FIG. 4 and FIG. 5. Assuming that the turn quantity design value Np of the high-voltage-side winding is 11, FIG. 4 and FIG. 5 respectively show winding arrangement manners of matrix transformers having two sub-transformers and three sub-transformers.

In FIG. 4, a sub-transformer 401 and a sub-transformer 402 are respectively used as the first sub-transformer and the second sub-transformer of a matrix transformer. A second winding, a first-layer first winding, and a second-layer first winding are wound around each of magnetic core columns of the sub-transformers 401 and 402. Turn quantities of first-layer first windings of the sub-transformer 401 and the sub-transformer 402 are respectively represented as Np1-1 and Np2-1. Turn quantities of second-layer first windings of the sub-transformer 401 and the sub-transformer 402 are respectively represented as Np1-2 and Np2-2.

In a two-sub-transformer scenario shown in FIG. 4, Np1-1=6, Np1-2=5, Np2-1=5, and Np2-2=6. A turn quantity of a first-layer high-voltage-side sub-winding is Np-1=Np1-1+Np2-1=11, a turn quantity of a second-layer high-voltage-side sub-winding is Np-2=Np1-2+Np2-2=11, and both the turn quantities meet the formula (1). A sum of turn quantities of first windings of two layers of the sub-transformer 401 is Np1=Np1-1+Np1-2=11, a sum of turn quantities of first windings of two layers of the sub-transformer 402 is Np2=Np2-1+Np2-2=11, and both the sums meet the formula (2).

In FIG. 5, a sub-transformer 501, a sub-transformer 502, and a sub-transformer 503 are used as the first sub-transformer, the second sub-transformer, and the third sub-transformer of a matrix transformer. A second winding, a first-layer first winding, and a second-layer first winding are wound around each of magnetic core columns of the sub-transformers 501 to 503. A second winding, a first-layer first winding, a second-layer first winding, and a third-layer first winding are wound around each of magnetic core columns of the sub-transformers 501 to 503. Turn quantities of first-layer first windings of the sub-transformers 501 to 503 are respectively represented as Np1-1, Np2-1, and Np3-1. Turn quantities of second-layer first windings of the sub-transformers 501 to 503 are respectively represented as Np1-2, Np2-2, and Np3-2. Turn quantities of third-layer first windings of the sub-transformers 501 to 503 are respectively represented as Np1-3, Np2-3, and Np3-3.

In a three-sub-transformer scenario shown in FIG. 5, Np1-1=4, Np1-2=4, Np1-3=3, Np2-1=4, Np2-2=3, Np2-3=4, Np3-1=3, Np3-2=4, and Np2-3=4. A turn quantity of a first-layer high-voltage-side sub-winding is Np-1=Np1-1+Np2-1+Np3-1=11, a turn quantity of a second-layer high-voltage-side sub-winding is Np-2=Np1-2+Np2-2+Np3-2=11, a turn quantity of a third-layer high-voltage-side sub-winding is Np-3=Np1-3+Np2-3+Np3-3=11, and all the turn quantities meet the formula (1). A sum of turn quantities of first windings of three layers of the sub-transformer 501 is Np1=Np1-1+Np1-2+Np1-3=11, a sum of turn quantities of first windings of three layers of the sub-transformer 502 is Np2=Np2-1+Np2-2+Np2-3=11, and a sum of turn quantities of first windings of three layers of the sub-transformer 503 is Np3=Np3-1+Np3-2+Np3-3=11, and all the sums meet the formula (2).

Although the ratio of the turn quantity design value of the high-voltage-side winding to the sub-transformer quantity n is not an integer, a turn quantity of a high-voltage-side sub-winding of each layer is enabled to be equal to the turn quantity design value of the high-voltage-side winding, referring to the formula (1), and high-voltage-side sub-windings of all layers are enabled to be connected in parallel, so that a total quantity of actually wound turns of the high-voltage-side winding matches the turn quantity design value, and efficiency and a voltage adjustment range of the matrix transformer do not need to be sacrificed. In addition, because a sum of turn quantities of first windings of n layers of each sub-transformer is equal to the turn quantity design value of the high-voltage-side winding, referring to the formula (2), all the magnetic core columns have a same magnetic flux. Under a condition that turn quantities of the second windings of the n sub-transformers are equal, voltages corresponding to the second windings are equal, so that the second windings can be directly connected in parallel for use. In this way, normal use performance of the matrix transformer is ensured.

In a possible implementation, cross-sectional areas of the magnetic core columns of the n sub-transformers are equal and materials of the magnetic core columns are the same. In this case, even if no air gaps are disposed in the magnetic core columns of the n sub-transformers, it can be ensured that the magnetic core columns of the n sub-transformers have a same magnetic flux. In another possible implementation, cross-sectional areas of the magnetic core columns of the n sub-transformers are unequal and/or materials of the magnetic core columns are different. In this case, air gaps may be disposed in the magnetic core columns of the n sub-transformers, so that the magnetic core columns of the n sub-transformers have a same magnetic flux. For persons skilled in the art, the disposing the air gaps in the magnetic core columns belongs to a relatively mature technology, and the disposing the air gaps includes a plurality of implementations. Therefore, an implementation of disposing the air gaps is not described herein.

In this embodiment of this application, because the ratio of the turn quantity design value of the high-voltage-side winding to the sub-transformer quantity n is not an integer, and the n-layer first winding is wound in each sub-transformer, a ratio of the turn quantity design value of the high-voltage-side winding to a layer quantity of a first winding wound in any sub-transformer is also not an integer. To ensure that the total quantity of actually wound turns of the high-voltage-side winding matches the turn quantity design value, in this embodiment, the turn quantity design value of the high-voltage-side winding is not evenly divided among the n sub-transformers of the matrix transformer in an even division manner, but the first windings are arranged according to the formula (1) and the formula (2).

In a possible implementation, a turn quantity of a first winding of at least one layer of the $i^{th}$ sub-transformer of the matrix transformer is unequal to turn quantities of first windings of the other layers. As shown in FIG. 5, a turn quantity of a third-layer first winding of the sub-transformer 501 is Np1-3=3, and both the turn quantity Np1-1 of a first-layer first winding and the turn quantity Np1-2 of a second-layer first winding of the sub-transformer 501 are 4.

In addition, a turn quantity of an $x^{th}$-layer first winding of at least one of the n sub-transformers of the matrix transformer is unequal to turn quantities of $x^{th}$-layer first windings of the other sub-transformers. As shown in FIG. 5, a turn quantity of a first-layer first winding of the sub-transformer 503 is Np3-1=3, and both the turn quantity Np1-1 of a first-layer first winding of the sub-transformer 501 and the turn quantity Np2-1 of a first-layer first winding of the sub-transformer 502 are 4.

In a possible implementation, a difference between a first winding of a layer with a largest turn quantity and a first winding of a layer with a smallest turn quantity in the $i^{th}$ sub-transformer of the matrix transformer provided in this embodiment of this application is 1 turn. As shown in FIG. 4, a first-layer first winding of the sub-transformer 401 is a first winding of a layer with a largest turn quantity, and the largest turn quantity is 6; and a second-layer first winding of the sub-transformer 401 is a first winding of a layer with a smallest turn quantity, and the smallest turn quantity is 5. In another possible implementation, a difference between the turn quantities of the first windings of the layers of the $i^{th}$ sub-transformer may be greater than 1. For example, a first-layer 7-turn first winding and a second-layer 4-turn first winding are wound for a magnetic core column of the sub-transformer 401.

In a possible implementation, in the matrix transformer provided in this embodiment of this application, a difference between an $x^{th}$-layer first winding with a largest turn quantity and an $x^{th}$-layer first winding with a smallest turn quantity in the n $x^{th}$-layer first windings connected in series to form the $x^{th}$-layer high-voltage-side sub-winding is 1 turn. As shown in FIG. 4, a first-layer 6-turn first winding of the sub-transformer 401 is a first-layer first winding with a largest turn quantity, and a first-layer 5-turn first winding of the sub-transformer 402 is a first-layer first winding with a smallest turn quantity. In another possible implementation, a difference between turn quantities of an $x^{th}$-layer first winding with a largest turn quantity and an $x^{th}$-layer first winding with a smallest turn quantity in the n $x^{th}$-layer first windings connected in series to form the $x^{th}$-layer high-voltage-side sub-winding may be greater than 1. For example, a first-layer 7-turn first winding is wound for a magnetic core column of the sub-transformer 401, and a first-layer 4-turn first winding is wound for a magnetic core column of the sub-transformer 402.

In actual application, to ensure that the formulas (1) and (2) are met, a smallest first-winding turn quantity or a largest first-winding turn quantity may be rotated among magnetic core columns of different sub-transformers and different lines in a plurality of rotation manners. For ease of understanding, the following provides descriptions with reference to examples in Table 1 to Table 3. For example, the matrix transformer includes four sub-transformers. Table 1 to Table 3 separately show three different rotation manners. In the rotation manner examples provided in Table 1 to Table 3, it is assumed that the turn quantity design value of the high-voltage-side winding is 11.

Referring to Table 1, a smallest first-winding turn quantity is rotated in an orderly manner among a first-layer high-voltage-side sub-winding to a fourth-layer high-voltage-side sub-winding. In addition, the smallest first-winding turn quantity is rotated in an orderly manner among the first sub-transformer to the fourth sub-transformer. As shown in Table 1, a smallest turn quantity 2 is gradually rotated from the first layer to the fourth layer in a layer number increasing direction, and the smallest turn quantity 2 is gradually rotated from the first sub-transformer to the fourth sub-transformer in a sub-transformer sequence number i increasing direction.

**Table 1 Orderly rotation**

| $i^{th}$ sub-transformer / $x^{th}$ layer | Np1 | Np2 | Np3 | Np4 |
|---|---|---|---|---|
| Np−1 | 2 | 3 | 3 | 3 |
| Np−2 | 3 | 2 | 3 | 3 |
| Np−3 | 3 | 3 | 2 | 3 |
| Np−4 | 3 | 3 | 3 | 2 |

Referring to Table 2, a smallest first-winding turn quantity is rotated in an orderly manner among a first-layer high-voltage-side sub-winding to a fourth-layer high-voltage-side sub-winding. In addition, the smallest first-winding turn quantity is rotated in reverse order among the first sub-transformer to the fourth sub-transformer. As shown in Table 2, a smallest turn quantity 2 is gradually rotated from the first layer to the fourth layer in a layer number increasing direction, and the smallest turn quantity 2 is gradually rotated from the fourth sub-transformer to the first sub-transformer in a sub-transformer sequence number i decreasing direction. In addition, if the example in Table 2 is considered as orderly rotation of the smallest first-winding turn quantity among the first sub-transformer to the fourth sub-transformer, the smallest turn quantity is rotated in reverse order among the first-layer high-voltage-side sub-winding to the fourth-layer high-voltage-side sub-winding.

**Table 2 Reverse-order rotation**

| $i^{th}$ sub-transformer / $x^{th}$ layer | Np1 | Np2 | Np3 | Np4 |
|---|---|---|---|---|
| Np−1 | 3 | 3 | 3 | 2 |
| Np−2 | 3 | 3 | 2 | 3 |
| Np−3 | 3 | 2 | 3 | 3 |
| Np−4 | 2 | 3 | 3 | 3 |

Referring to Table 3, a smallest first-winding turn quantity is rotated in an orderly manner among a first-layer high-voltage-side sub-winding to a fourth-layer high-voltage-side sub-winding. In addition, the smallest first-winding turn quantity is rotated in a disorderly manner among the first sub-transformer to the fourth sub-transformer. As shown in Table 3, a smallest turn quantity 2 is gradually rotated from the first layer to the fourth layer in a layer number increasing direction, and the smallest turn quantity 2 is rotated from the first sub-transformer to the third sub-transformer, then rotated to the fourth sub-transformer, and then rotated to the second sub-transformer. In addition, if the example in Table 3 is considered as orderly rotation of the smallest first-winding turn quantity among the first sub-transformer to the fourth sub-transformer, the smallest turn quantity is rotated in a disorderly manner among the first-layer high-voltage-side sub-winding to the fourth-layer high-voltage-side sub-winding.

**Table 3 Disorderly rotation**

| $i^{th}$ sub-transformer / $x^{th}$ layer | Np1 | Np2 | Np3 | Np4 |
|---|---|---|---|---|
| Np−1 | 2 | 3 | 3 | 3 |
| Np−2 | 3 | 3 | 2 | 3 |
| Np−3 | 3 | 3 | 3 | 2 |
| Np−4 | 3 | 2 | 3 | 3 |

It can be learned from the rotation manner examples in Table 1 to Table 3 that, in actual application, a smallest first-winding turn quantity or a largest first-winding turn quantity may be rotated among magnetic core columns of different sub-transformers and different lines in a plurality of rotation manners. Therefore, in the matrix transformer provided in this embodiment, a rotation manner is not limited, provided that a first-winding turn quantity meets the formulas (1) and (2).

During specific implementation, for each sub-transformer, a second winding and first windings of all layers on a magnetic core of the sub-transformer may be wound in a plurality of winding manners. For example, in the sub-transformer 401 shown in FIG. 4, a two-layer first winding and a second winding are wound around the magnetic core column of the sub-transformer 401 in a sandwich winding manner. The first-layer first winding may be wound on an innermost side, the second-layer first winding may be wound on an outermost side, and the second winding may be sandwiched between the first-layer first winding and the second-layer first winding. Alternatively, the second-layer first winding may be wound on an innermost side, the first-layer first winding may be wound on an outermost side, and the second winding may be sandwiched between the first-layer first winding and second-layer first winding. In addition, alternatively, the second winding may be wound on an innermost side or an outermost side of an n-layer first winding.

The following describes a winding connection manner of the matrix transformer provided in the foregoing embodiment.

In a possible connection manner, a high-voltage-side sub-winding of each layer includes a first end and a second end, first ends of the first-layer high-voltage-side sub-winding to the $n^{th}$-layer high-voltage-side sub-winding are connected to form a first pin of the high-voltage-side winding, and second ends of the first-layer high-voltage-side sub-winding to the $n^{th}$-layer high-voltage-side sub-winding are connected to form a second pin of the high-voltage-side winding. As shown in FIG. 4 and FIG. 5, the $x^{th}$-layer high-voltage-side sub-winding is continuously wired across different sub-transformers, to implement a continuously wound $x^{th}$-layer high-voltage-side sub-winding in the matrix transformer.

A connection manner of the second windings is already described in detail in the foregoing embodiment. Therefore, for details, refer to the foregoing embodiment, and details are not described herein again.

In the matrix transformer provided in the foregoing embodiment, a wire material of the first winding may be the same as or different from a wire material of the second winding. The first winding and the second winding each are made of any one of the following wire materials: a Litz wire, a PCB, an enameled copper wire, copper foil, or a flexible flat cable. The Litz wire is a wire formed by twisting or weaving a plurality of independent insulated wires, and can be applied to the embodiments of this application as a winding wire material to reduce a skin effect.

Based on the matrix transformer provided in the foregoing embodiment, an embodiment of this application further provides a power converter. The electronic power converter needs to be isolated by the foregoing matrix transformer. The power converter includes the foregoing matrix transformer, and further includes a power electronic device and a control circuit. The power electronic device is also referred to as a power semiconductor device.

Usually, power electronic devices are classified into the following types based on degrees to which the power electronic devices can be controlled by using control circuit signals:

(1) a semi-control device, such as a thyristor;
(2) a full-control device, such as a gate-turn-off thyristor GTO, a giant transistor GTR, a power metal-oxide-semiconductor field-effect transistor Power MOSFET, or an insulated gate bipolar transistor IGBT; and
(3) an uncontrollable device, such as a diode.

In the power converter provided in this embodiment of this application, a power electronic device on at least one side of a low-voltage-side winding of the matrix transformer is a controllable device, namely, the foregoing semi-control device or full-control device. The other side of the low-voltage-side winding of the matrix transformer is a controllable device or a diode. In the power converter provided in this embodiment of this application, the power electronic device and the control circuit thereof implement voltage and current control and power conversion on the matrix transformer. A specific type of the power converter includes but is not limited to any one of the following types:

a rectifier, a power adapter, an inverter, a battery management system (Battery Manage System, BMS), or a frequency converter.

An application scenario of the rectifier is not specifically limited. The inverter may be a common inverter, or may be a photovoltaic inverter. The BMS may be of a communications device, or may be of an electric vehicle.

According to the power converter that has the foregoing matrix transformer, because the matrix transformer of the power converter may be wound based on a turn quantity design value of a high-voltage-side winding, so that an expected transformer ratio can be implemented without a need to sacrifice efficiency and a voltage adjustment range of the matrix transformer, thereby reducing a loss.

Based on the matrix transformer provided in the foregoing embodiment, correspondingly, this application further provides a matrix transformer winding arrangement method. The following describes an implementation of the method with reference to the embodiments and the accompanying drawings.

FIG. 6 is a flowchart of a matrix transformer winding arrangement method. The method may be manually implemented, or may be implemented by an automated device that has a data processing function. As shown in FIG. 6, the method includes the following steps.

Step 601: Obtain a turn quantity design value of a high-voltage-side winding of a matrix transformer, where the matrix transformer includes n sub-transformers, and n is an integer greater than 1.

During specific implementation, an ideal design value of a transformer ratio of the matrix transformer in an actual application scenario may be first obtained. As an example, the transformer ratio is 11: 3. If a turn quantity design value of a low-voltage-side winding is 3, the turn quantity design value of the high-voltage-side winding can be obtained as 11 by multiplying the ideal design value of the transformer ratio by the turn quantity design value of the low-voltage-side winding.

Step 602: When determining that a ratio of the turn quantity design value to n is not an integer, separately arrange first windings on magnetic core columns of the n sub-transformers based on the turn quantity design value to enable a sum of turn quantities of the first windings of the n sub-transformers to be equal to the turn quantity design value, and separately wind second windings around the magnetic core columns of all the sub-transformers; and connect the first windings of the n sub-transformers in series to form the high-voltage-side winding, and connect the second windings of the n sub-transformers in parallel to form the low-voltage-side winding of the matrix transformer.

If n=4, for a schematic diagram of arranging the first windings around the magnetic core columns of the sub-transformers, refer to FIG. 1. If n=3, for a schematic diagram of arranging the first windings around the magnetic core columns of the sub-transformers, refer to FIG. 2. If n=2, for a schematic diagram of arranging the first windings around the magnetic core columns of the sub-transformers, refer to FIG. 3.

Step 603: Control a magnetic inductance ratio of the first windings of the n sub-transformers to be equal to a turn quantity ratio of the first windings of the n sub-transformers.

As a possible implementation, in this step, air gaps may be disposed in the magnetic core columns of the n sub-transformers to control the magnetic inductance ratio of the first windings of the n sub-transformers to be equal to the turn quantity ratio of the first windings of the n sub-transformers. For example, magnetic inductances are measured while the air gaps are ground in the magnetic core columns. The air gap grinding operation is stopped when the magnetic inductance ratio of the first windings of the n sub-transformers is equal to the turn quantity ratio of the first windings of the n sub-transformers.

In the matrix transformer winding arrangement method provided in this embodiment of this application, the high-voltage-side winding is formed by connecting the first windings of the n sub-transformers in series, a total quantity of actually wound turns of the high-voltage-side winding matches the turn quantity design value, and efficiency and a voltage adjustment range of the matrix transformer do not need to be sacrificed. The magnetic inductance ratio of the first windings of the n sub-transformers is controlled to be equal to the turn quantity ratio of the first windings of the n sub-transformers, thereby ensuring that a ratio of voltages obtained by the first windings of the n sub-transformers through division is equal to the turn quantity ratio of the first windings of the n sub-transformers.

Under a condition that magnetic fluxes of the magnetic core columns of the n sub-transformers are equal and turn quantities of the second windings are equal, voltages corresponding to the second windings are equal, so that the second windings can be directly connected in parallel for use. In this way, normal use performance of the matrix transformer is ensured. In addition, the second windings may be connected in parallel and then connected to one rectifier, or may be separately connected to rectifiers and then connected in parallel to form one branch.

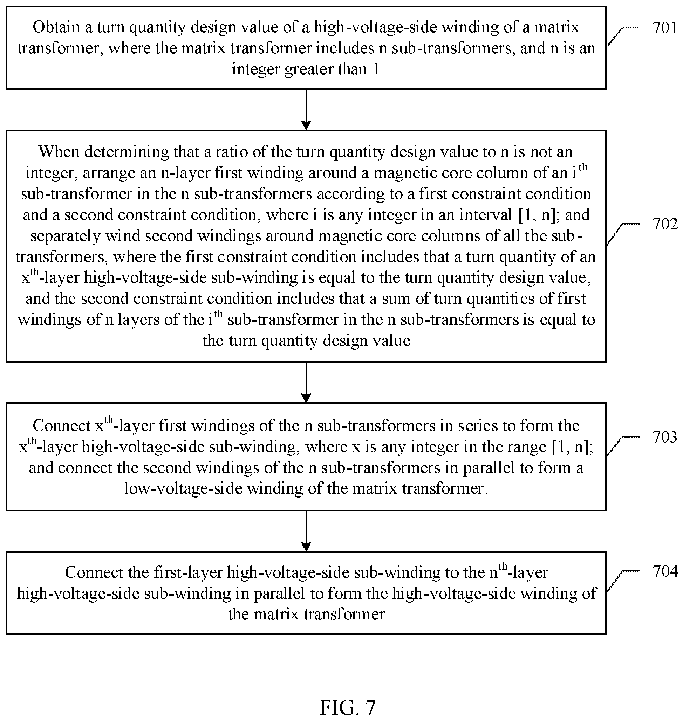

FIG. 7 is a flowchart of another matrix transformer winding arrangement method. The method may be manually implemented, or may be implemented by an automated device that has a data processing function. As shown in FIG. 7, the method includes the following steps.

Step 701: Obtain a turn quantity design value of a high-voltage-side winding of a matrix transformer, where the matrix transformer includes n sub-transformers, and n is an integer greater than 1.

An implementation of this step is basically the same as an implementation of step 601. Therefore, for descriptions of step 701, refer to the foregoing winding arrangement method embodiment.

Step 702: When determining that a ratio of the turn quantity design value to n is not an integer, arrange an n-layer first winding around a magnetic core column of an $i^{th}$ sub-transformer in the n sub-transformers according to a first constraint condition and a second constraint condition, where i is any integer in an interval [1, n]; and separately wind second windings around magnetic core columns of all the sub-transformers, where the first constraint condition includes that a turn quantity of an $x^{th}$-layer high-voltage-side sub-winding is equal to the turn quantity design value, and the second constraint condition includes that a sum of turn quantities of first windings of n layers of the $i^{th}$ sub-transformer in the n sub-transformers is equal to the turn quantity design value.

In this step, for the first constraint condition and the second constraint condition that are used as bases for arranging first windings of all layers, respectively refer to the formula (1) and the formula (2).

Step 703: Connect $x^{th}$-layer first windings of the n sub-transformers in series to form the $x^{th}$-layer high-voltage-side sub-winding, where x is any integer in the range [1, n]; and connect the second windings of the n sub-transformers in parallel to form a low-voltage-side winding of the matrix transformer.

For example, a first-layer first winding of the first sub-transformer, a first-layer first winding of the second sub-transformer, ..., and a first-layer first winding of an $n^{th}$ sub-transformer are connected in series to form a first-layer high-voltage-side sub-winding of the matrix transformer. By analogy, a second-layer high-voltage-side sub-winding, a third-layer high-voltage-side sub-winding, ..., and an $n^{th}$-layer high-voltage-side sub-winding are formed.

Step 704: Connect the first-layer high-voltage-side sub-winding to the $n^{th}$-layer high-voltage-side sub-winding in parallel to form the high-voltage-side winding of the matrix transformer.

In the matrix transformer winding arrangement method provided in this embodiment of this application, although the ratio of the turn quantity design value of the high-voltage-side winding to the sub-transformer quantity n is not an integer, a turn quantity of a high-voltage-side sub-winding of each layer is enabled to be equal to the turn quantity design value of the high-voltage-side winding, and high-voltage-side sub-windings of all layers are enabled to be connected in parallel, so that a total quantity of actually wound turns of the high-voltage-side winding matches the turn quantity design value, and efficiency and a voltage adjustment range of the matrix transformer do not need to be sacrificed. Because a sum of turn quantities of first windings of n layers of each sub-transformer is equal to the turn quantity design value of the high-voltage-side winding, all the magnetic core columns have a same magnetic flux. Under a condition that turn quantities of the second windings of the n sub-transformers are equal, voltages corresponding to the second windings are equal, so that the second windings can be directly connected in parallel for use. In this way, normal use performance of the matrix transformer is ensured. In addition, the second windings may be connected in parallel and then connected to one rectifier, or may be separately connected to rectifiers and then connected in parallel to form one branch.

In a possible implementation, step 702 is performed, so that on the magnetic core columns of the n sub-transformers of the matrix transformer, a difference between a first winding of a layer with a largest turn quantity and a first winding of a layer with a smallest turn quantity in the $i^{th}$ sub-transformer is 1 turn, and a difference between an $x^{th}$-layer first winding with a largest turn quantity and an $x^{th}$-layer first winding with a smallest turn quantity in the n $x^{th}$-layer first windings connected in series to form the $x^{th}$-layer high-voltage-side sub-winding is 1 turn.

The arranging an n-layer first winding around a magnetic core column of an $i^{th}$ sub-transformer in the n sub-transformers according to a first constraint condition and a second constraint condition specifically includes:
arranging the n-layer first winding on the magnetic core column of the $i^{th}$ sub-transformer in the n sub-transformers according to the first constraint condition and the second constraint condition, and rotating a smallest first-winding turn quantity or a largest first-winding turn quantity among the first-layer high-voltage-side sub-winding to the $n^{th}$-layer high-voltage-side sub-winding and the first sub-transformer to an $n^{th}$ sub-transformer, where a rotation manner is any one of the following:
orderly rotation, reverse-order rotation, or disorderly rotation.

For examples of orderly rotation, reverse-order rotation, and disorderly rotation of a first-winding turn quantity, refer to Table 1 to Table 3.

It should be understood that, in this application, "a plurality of" means two or more than two. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between associated objects.

The foregoing embodiments are merely intended for describing the technical solutions of this application, but not for limiting this application.

**Claims**

1. A matrix transformer, comprising: n sub-transformers (101-104),

   wherein n is an integer greater than 1, each of magnetic core columns of the n sub-transformers (101-104) is wound with a first winding and a second winding, first windings are connected in series to form a high-voltage-side winding of the matrix transformer, and second windings are connected in parallel to form a low-voltage-side winding of the matrix transformer;
   a sum of turn quantities of the first windings of the n sub-transformers is equal to a turn quantity design value of the high-voltage-side winding, and a ratio of the turn quantity design value to n is not an integer; and
   a magnetic inductance ratio of the first windings of the n sub-transformers (101-104) is equal to a turn quantity ratio of the first windings of the n sub-transformers (101-104).

2. The matrix transformer according to claim 1, wherein air gaps are disposed in the magnetic core columns of the n sub-transformers (101-104), so that the magnetic inductance ratio of the first windings of the n sub-transformers (101-104) is equal to the turn quantity ratio of the first windings of the n sub-transformer; (101-104).

3. The matrix transformer according to claim 1, wherein a turn quantity of a first winding of at least one of the n sub-transformers (101-104) is unequal to turn quantities of first windings of the other sub-transformer (101-104).

4. The matrix transformer according to claim 3, wherein a difference between a first winding with a largest turn quantity and a first winding with a smallest turn quantity in the n sub-transformers (101-104) is 1 turn.

5. The matrix transformer according to claim 2, wherein cross-sectional areas of the magnetic core columns of the n sub-transformers (101-104) are equal, materials of the magnetic core columns are the same, and an air gap disposed in a magnetic core column of at least one of the n sub-transformers (101-104) is different from air gaps disposed in magnetic core columns of the other sub-transformers.

6. The matrix transformer according to any one of claims 1 to 5, wherein each of the first windings of the n sub-transformers (101-104) comprises a first pin and a second pin, and each of the second windings of the n sub-transformers (101-104) comprises a third pin and a fourth pin; and first pins and second pins are connected to an external circuit to establish a serial relationship of the first windings, and third pins and fourth pins are connected to the external circuit to establish a parallel relationship of the second windings.

7. The matrix transformer according to any one of claims 1 to 5, wherein the first windings of the n sub-transformers (101-104) are directly connected in series, the high-voltage-side winding comprises a total of two pins, each of the second windings of the n sub-transformers (101-104) comprises a third pin and a fourth pin, and third pins and fourth pins are connected to an external circuit to establish a parallel relationship of the second windings.

8. A matrix transformer, comprising: n sub-transformers (101-104), wherein n is an integer greater than 1, each of magnetic core columns of the n sub-transformers (101-104) is wound with a second winding and an n-layer first winding:

   $x^{th}$-layer first windings of the n sub-transformers (101-104) are connected in series to form an $x^{th}$-layer high-voltage-side
   sub-winding, x is any integer in an interval [1, n], a first-layer high-voltage-side sub-winding to an $n^{th}$-layer high-voltage-side sub-winding are connected in parallel to form a high-voltage-side winding of the matrix transformer, and second windings of the n sub-transformers (101-104)
   are connected in parallel to form a low-voltage-side winding of the matrix transformer; and
   a turn quantity of the $x^{th}$-layer high-voltage-side sub-winding is equal to a turn quantity design value of the high-voltage-side winding, a sum of turn quantities of first windings of n layers of an $i^{th}$ sub-transformer in the n sub-transformers (101-104) is equal to the turn quantity design value of the high-voltage-side winding, i is any integer in the interval [1, n], and a ratio of the turn quantity design value to n is not an integer.

9. The matrix transformer according to claim 8, wherein no air gaps are disposed in the magnetic core columns of the n sub-transformers (101-104), cross-sectional areas of the magnetic core columns are equal, and materials of the magnetic core columns are the same, so that the magnetic core columns of the n sub-transformers (101-104) have a same magnetic flux;

or air gaps are disposed in the magnetic core columns of the n sub-transformers (101-104), so that the magnetic core columns of the n sub-transformers (101-104) have a same magnetic flux.

10. The matrix transformer according to claim 8, wherein a turn quantity of a first winding of at least one layer of the $i^{th}$ sub-transformer is unequal to turn quantities of first windings of the other layers; and
a turn quantity of an $x^{th}$-layer first winding of at least one of the n sub-transformers (101-104) is unequal to turn quantities of $x^{th}$-layer first windings of the other sub-transformers.

11. The matrix transformer according to claim 10, wherein a difference between a first winding of a layer with a largest turn quantity and a first winding of a layer with a smallest turn quantity in the $i^{th}$ sub-transformer is 1 turn; and
a difference between an $x^{th}$-layer first winding with a largest turn quantity and an $x^{th}$-layer first winding with a smallest turn quantity in the n $x^{th}$-layer first windings connected in series to form the $x^{th}$-layer high-voltage-side sub-winding is 1 turn.

12. The matrix transformer according to claim 11, wherein a smallest first-winding turn quantity or a largest first-winding turn quantity is rotated among the first-layer high-voltage-side sub-winding to the $n^{th}$-layer high-voltage-side sub-winding and the first sub-transformer to an $n^{th}$ sub-transformer, and a rotation manner is any one of the following: orderly rotation, reverse-order rotation, or disorderly rotation.

13. A power converter, comprising the matrix transformer according to any one of claims 1 to 12, and further comprising a power electronic device and a control circuit;

both sides of a low-voltage-side winding of the matrix transformer are controllable devices; or one side of the low-voltage side winding of the matrix transformer is a controllable device, and the other side is a diode; and the controllable device is controlled by a signal provided by the control circuit; and
the power electronic device and the control circuit are configured to implement voltage control, current control, and power conversion on the matrix transformer.

14. The power converter according to claim 13, wherein the power converter is any one of the following: a rectifier, an inverter, a power adapter, a frequency converter, or a battery management system.

15. A matrix transformer winding arrangement method, comprising:

obtaining a turn quantity design value of a high-voltage-side winding of a matrix transformer, wherein the matrix transformer comprises n sub-transformers (101-104), and n is an integer greater than 1;
when determining that a ratio of the turn quantity design value to n is not an integer, separately arranging first windings on magnetic core columns of the n sub-transformer, (101-104)
based on the turn quantity design value to enable a sum of turn quantities of the first windings of the n sub-transformers (101-104) to be equal to the turn quantity design value, and separately winding second windings around the magnetic core columns of all the sub-transformers (101-104); and connecting the first windings of the n sub-transformers (101-104) in series to form the high-voltage-side winding, and connecting the second windings of the n sub-transformers (101-104) in parallel to form a low-voltage-side winding of the matrix transformer; and
controlling a magnetic inductance ratio of the first windings of the n sub-transformers (101-104) to be equal to a turn quantity ratio of the first windings of the n sub-transformers (101-104).

**Patentansprüche**

1. Matrixtransformator, umfassend: n Teiltransformatoren (101-104),

wobei n eine ganze Zahl größer als 1 ist, jede von Magnetkernsäulen der n Teiltransformatoren (101-104) mit einer ersten Wicklung und einer zweiten Wicklung gewickelt ist, erste Wicklungen zum Bilden einer hochspannungsseitigen Wicklung des Matrixtransformators in Reihe geschaltet sind, und zweite Wicklungen zum Bilden einer niederspannungsseitigen Wicklung des Matrixtransformators parallel geschaltet sind, eine Summe von Windungszahlen der ersten Wicklungen der n Teiltransformatoren gleich einem Windungszahlbemessungswert der hochspannungsseitigen Wicklung ist, und ein Verhältnis des Windungszahlbemessungswertes zu n keine ganze Zahl ist, und

ein magnetisches Induktivitätsverhältnis der ersten Wicklungen der n Teiltransformatoren (101-104) gleich einem Windungszahlenverhältnis der ersten Wicklungen der n Teiltransformatoren (101-104) ist.

2. Matrixtransformator nach Anspruch 1, wobei in den Magnetkernsäulen der n Teiltransformatoren (101-104) Luftspalte eingerichtet sind, so dass das magnetische Induktivitätsverhältnis der ersten Wicklungen der n Teiltransformatoren (101-104) gleich dem Windungszahlenverhältnis der ersten Wicklungen der n Teiltransformatoren (101-104) ist.

3. Matrixtransformator nach Anspruch 1, wobei eine Windungszahl einer ersten Wicklung von mindestens einem der n Teiltransformatoren (101-104) ungleich Windungszahlen von ersten Wicklungen der anderen Teiltransformatoren (101-104) ist.

4. Matrixtransformator nach Anspruch 3, wobei eine Differenz zwischen einer ersten Wicklung mit einer größten Windungszahl und einer ersten Wicklung mit einer kleinsten Windungszahl in den n Teiltransformatoren (101-104) 1 Windung beträgt.

5. Matrixtransformator nach Anspruch 2, wobei Querschnittsflächen der Magnetkernsäulen der n Teiltransformatoren (101-104) gleich sind, die Materialien der Magnetkernsäulen gleich sind und ein Luftspalt, der in einer Magnetkernsäule von mindestens einem der n Teiltransformatoren (101-104) eingerichtet ist, sich von Luftspalten unterscheidet, die in Magnetkernsäulen der anderen Teiltransformatoren eingerichtet sind.

6. Matrixtransformator nach einem der Ansprüche 1 bis 5, wobei jede der ersten Wicklungen der n Teiltransformatoren (101-104) einen ersten Stift und einen zweiten Stift umfasst, und jede der zweiten Wicklungen der n Teiltransformatoren (101-104) einen dritten Stift und einen vierten Stift umfasst, und

erste Stifte und zweite Stifte mit einer externen Schaltung zum Herstellen einer seriellen Beziehung der ersten Wicklungen verbunden sind, und dritte Stifte und vierte Stifte mit der externen Schaltung zum Herstellen einer parallelen Beziehung der zweiten Wicklungen verbunden sind.

7. Matrixtransformator nach einem der Ansprüche 1 bis 5, wobei die ersten Wicklungen der n Teiltransformatoren (101-104) direkt in Reihe geschaltet sind, die hochspannungsseitige Wicklung insgesamt zwei Stifte umfasst, jede der zweiten Wicklungen der n Teiltransformatoren (101-104) einen dritten Stift und einen vierten Stift umfasst und dritte Stifte und vierte Stifte mit einer externen Schaltung zum Herstellen einer parallelen Beziehung der zweiten Wicklungen verbunden sind.

8. Matrixtransformator, umfassend: n Teiltransformatoren (101-104),

wobei n eine ganze Zahl größer als 1 ist, jede von Magnetkernsäulen der n Teiltransformatoren (101-104) mit einer zweiten Wicklung und einer ersten Wicklung der n-ten Lage gewickelt ist;
erste Wicklungen der x-ten Lage der n Teiltransformatoren (101-104) zum Bilden einer hochspannungsseitigen Teilwicklung der x-ten Lage in Reihe geschaltet sind, x eine beliebige ganze Zahl in einem Intervall [1, n] ist, eine hochspannungsseitige Teilwicklung der ersten Lage bis zu einer hochspannungsseitigen Teilwicklung der n-ten Lage zum Bilden einer hochspannungsseitigen Wicklung des Matrixtransformators parallel geschaltet sind, und
zweite Wicklungen der n Teiltransformatoren (101-104) zum Bilden einer niederspannungsseitigen Wicklung des Matrixtransformators parallel geschaltet sind, und eine Windungszahl der hochspannungsseitigen Teilwicklung der x-ten Lage gleich einem Windungszahlbemessungswert der hochspannungsseitigen Wicklung ist, eine Summe von Windungszahlen von ersten Wicklungen von n Lagen eines i-ten Teiltransformators von den n Teiltransformatoren (101-104) gleich dem Windungszahlbemessungswert der hochspannungsseitigen Wicklung ist, i eine beliebige ganze Zahl im Intervall [1, n] ist und ein Verhältnis des Windungszahlbemessungswertes zu n keine ganze Zahl ist.

9. Matrixtransformator nach Anspruch 8, wobei in den Magnetkernsäulen der n Teiltransformatoren (101-104) keine Luftspalte eingerichtet sind, Querschnittsflächen der Magnetkernsäulen gleich sind und Materialien der Magnetkernsäulen gleich sind, so dass die Magnetkernsäulen der n Teiltransformatoren (101-104) einen gleichen magnetischen Fluss aufweisen; oder
in den Magnetkernsäulen der n Teiltransformatoren (101-104) Luftspalte eingerichtet sind, so dass die Magnetkernsäulen der n Teiltransformatoren (101-104) einen gleichen magnetischen Fluss aufweisen.

10. Matrixtransformator nach Anspruch 8, wobei eine Windungszahl einer ersten Wicklung mindestens einer Lage des i-ten Teiltransformators ungleich zu Windungszahlen von ersten Wicklungen der anderen Lagen ist; und eine Windungszahl einer ersten Wicklung der x-ten Lage von mindestens einem der n Teiltransformatoren (101-104) ungleich zu Windungszahlen von ersten Wicklungen der x-ten Lage der anderen Teiltransformatoren ist.

11. Matrixtransformator nach Anspruch 10, wobei eine Differenz zwischen einer ersten Wicklung einer Lage mit einer größten Windungszahl und einer ersten Wicklung einer Lage mit einer kleinsten Windungszahl im i-ten Teiltransformator 1 Windung beträgt; und eine Differenz zwischen einer ersten Wicklung der x-ten Lage mit einer größten Windungszahl und einer ersten Wicklung der x-ten Lage mit einer kleinsten Windungszahl von den n ersten Wicklungen der x-ten Lage, die zum Bilden der hochspannungsseitigen Teilwicklung der x-ten Lage in Reihe geschaltet sind, 1 Windung beträgt.

12. Matrixtransformator nach Anspruch 11, wobei eine kleinste Windungszahl der ersten Wicklung oder eine größte Windungszahl der ersten Wicklung zwischen der hochspannungsseitigen Teilwicklung der ersten Lage und der hochspannungsseitigen Teilwicklung der n-ten Lage und dem ersten Teiltransformator und einem n-ten Teiltransformator gedreht wird und eine Art der Drehung eine beliebige der folgenden Arten ist: geordnete Drehung, Drehung in umgekehrter Reihenfolge oder ungeordnete Drehung.

13. Leistungswandler, umfassend einen Matrixtransformator nach einem der Ansprüche 1 bis 12, und ferner umfassend eine leistungselektronische Vorrichtung und eine Steuerschaltung;

wobei beide Seiten einer niederspannungsseitigen Wicklung des Matrixtransformators steuerbare Vorrichtungen sind, oder eine Seite der niederspannungsseitigen Wicklung des Matrixtransformators eine steuerbare Vorrichtung ist und die andere Seite eine Diode ist; und die steuerbare Vorrichtung durch ein von der Steuerschaltung bereitgestelltes Signal gesteuert wird, und
die leistungselektronische Vorrichtung und die Steuerschaltung dafür ausgelegt sind, Spannungssteuerung, Stromsteuerung und Leistungsumwandlung auf dem Matrixtransformator zu implementieren.

14. Leistungswandler nach Anspruch 13, wobei der Leistungswandler ein beliebiger der Folgenden ist: ein Gleichrichter, ein Wechselrichter, ein Netzadapter, ein Frequenzumwandler oder ein Batteriemanagementsystem.

15. Verfahren zur Anordnung der Wicklungen eines Matrixtransformators, umfassend:

Erhalten eines Windungszahlbemessungswertes einer hochspannungsseitigen Wicklung eines Matrixtransformators, wobei die Matrix n Teiltransformatoren (101-104) umfasst und n eine ganze Zahl größer als 1 ist;
wenn bestimmt wird, dass ein Verhältnis des Windungszahlbemessungswertes zu n keine ganze Zahl ist, getrenntes Anordnen von ersten Wicklungen auf Magnetkernsäulen der n Teiltransformatoren (101-104) auf der Grundlage des Windungszahlbemessungswertes, zum Ermöglichen, dass eine Summe von Windungszahlen der ersten Wicklungen der n Teiltransformatoren (101-104) gleich dem Windungszahlbemessungswert ist, und
getrenntes Wickeln von zweiten Wicklungen um die Magnetkernsäulen aller Teiltransformatoren (101-104); und in Reihe Schalten der ersten Wicklungen der n Teiltransformatoren (101-104) zum Bilden der hochspannungsseitigen Wicklung und Parallelschalten der zweiten Wicklungen der n Teiltransformatoren (101-104) zum Bilden einer niederspannungsseitigen Wicklung des Matrixtransformators; und
Steuern eines magnetischen Induktivitätsverhältnisses der ersten Wicklungen der n Teiltransformatoren (101-104), so dass es gleich einem Windungszahlenverhältnis der ersten Wicklungen der n Teiltransformatoren (101-104) ist.

**Revendications**

1. Transformateur matriciel, comprenant : n sous-transformateurs (101-104), où n est un nombre entier supérieur à 1, chacune des colonnes de noyau magnétique des n sous-transformateurs (101-104) est enroulée avec un premier enroulement et un second enroulement, les premiers enroulements sont connectés en série pour former un enroulement côté haute tension du transformateur matriciel, et les seconds enroulements sont connectés en parallèle pour former un enroulement côté basse tension du transformateur matriciel ;

une somme des nombres de tours des premiers enroulements des n sous-transformateurs étant égale à une valeur de conception de nombre de tours de l'enroulement côté haute tension, et un rapport entre la valeur de conception de nombre de tours et n n'étant pas un nombre entier ; et
un rapport d'inductance magnétique des premiers enroulements des n sous-transformateurs (101-104) étant égal à un rapport de nombre de tours des premiers enroulements des n sous-transformateurs (101-104).

2. Transformateur matriciel selon la revendication 1, dans lequel des entrefers sont disposés dans les colonnes de noyau magnétique des n sous-transformateurs (101-104), de telle sorte que le rapport d'inductance magnétique des premiers enroulements des n sous-transformateurs (101-104) soit égal au rapport de nombre de tours des premiers enroulements des n sous-transformateurs (101-104).

3. Transformateur matriciel selon la revendication 1, dans lequel un nombre de tours d'un premier enroulement d'au moins un des n sous-transformateurs (101-104) n'est pas égal aux nombres de tours des premiers enroulements des autres sous-transformateurs (101-104).

4. Transformateur matriciel selon la revendication 3, dans lequel une différence entre un premier enroulement ayant un nombre de tours maximum et un premier enroulement ayant un nombre de tours minimum parmi les n sous-transformateurs (101-104) est de 1 tour.

5. Transformateur matriciel selon la revendication 2, dans lequel les sections transversales des colonnes de noyau magnétique des n sous-transformateurs (101-104) sont égales, les matériaux des colonnes de noyau magnétique sont identiques, et l'entrefer disposé dans une colonne de noyau magnétique d'au moins un des n sous-transformateurs (101-104) est différent des entrefers disposés dans les colonnes de noyau magnétique des autres sous-transformateurs.

6. Transformateur matriciel selon l'une quelconque des revendications 1 à 5, dans lequel chacun des premiers enroulements des n sous-transformateurs (101-104) comprend une première broche et une deuxième broche, et chacun des seconds enroulements des n sous-transformateurs (101-104) comprend une troisième broche et une quatrième broche ; et les premières broches et les deuxièmes broches sont connectées à un circuit externe pour établir une relation en série des premiers enroulements, et les troisièmes broches et les quatrièmes broches sont connectées au circuit externe pour établir une relation en parallèle des seconds enroulements.

7. Transformateur matriciel selon l'une quelconque des revendications 1 à 5, dans lequel les premiers enroulements des n sous-transformateurs (101-104) sont directement connectés en série, l'enroulement côté haute tension comprend un total de deux broches, chacun des seconds enroulements des n sous-transformateurs (101-104) comprend une troisième broche et une quatrième broche, et les troisièmes broches et les quatrièmes broches sont connectées à un circuit externe pour établir une relation en parallèle des seconds enroulements.

8. Transformateur matriciel comprenant : n sous-transformateurs (101-104), où n est un nombre entier supérieur à 1, chacune des colonnes de noyau magnétique des n sous-transformateurs (101-104) est enroulée avec un second enroulement et un premier enroulement à n couches ;

les premiers enroulements de la $x^e$ couche des n sous-transformateurs (101-104) étant connectés en série pour former un sous-enroulement côté haute tension de la $x^e$ couche, x étant un nombre entier quelconque dans un intervalle [1, n], un sous-enroulement côté haute tension de la première couche à un sous-enroulement côté haute tension de la $n^e$ couche étant connectés en parallèle pour former un enroulement côté haute tension du transformateur matriciel, et les seconds enroulements des n sous-transformateurs (101-104) étant connectés en parallèle pour former un enroulement côté basse tension du transformateur matriciel ; et
un nombre de tours du sous-enroulement côté haute tension de la $x^e$ couche étant égal à une valeur de conception de nombre de tours de l'enroulement côté haute tension, une somme des nombres de tours des premiers enroulements des n couches d'un $i^e$ sous-transformateur parmi les n sous-transformateurs (101-104) étant égale à la valeur de conception de nombre de tours de l'enroulement côté haute tension, i étant un nombre entier quelconque dans l'intervalle [1, n], et un rapport entre la valeur de conception de nombre de tours et n n'étant pas un nombre entier.

9. Transformateur matriciel selon la revendication 8, dans lequel aucun entrefer n'est disposé dans les colonnes de noyau magnétique des n sous-transformateurs (101-104), les sections transversales des colonnes de noyau magnétique sont égales et les matériaux des colonnes de noyau magnétique sont identiques, de telle sorte que les colonnes de noyau magnétique des n sous-transformateurs (101-104) aient un même flux magnétique ; ou des entrefers sont disposés dans les colonnes de noyau magnétique des n sous-transformateurs (101-104), de telle sorte que les colonnes de noyau magnétique des n sous-transformateurs (101-104) aient un même flux magnétique.

10. Transformateur matriciel selon la revendication 8, dans lequel un nombre de tours d'un premier enroulement d'au moins une couche du $i^e$ sous-transformateur n'est pas égal aux nombres de tours des premiers enroulements des autres couches ; et
un nombre de tours d'un premier enroulement de la $x^e$ couche d'au moins un des n sous-transformateurs (101-104) n'est pas égal aux nombres de tours des premiers enroulements de la $x^e$ couche des autres sous-transformateurs.

11. Transformateur matriciel selon la revendication 10, dans lequel une différence entre un premier enroulement d'une couche ayant un nombre de tours maximum et un premier enroulement d'une couche ayant un nombre de tours minimum dans le $i^e$ sous-transformateur est de 1 tour ; et une différence entre un premier enroulement de la $x^e$ couche ayant un nombre de tours maximum et un premier enroulement de la $x^e$ couche ayant un nombre de tours minimum parmi les n premiers enroulements de la $x^e$ couche connectés en série pour former le sous-enroulement côté haute tension de la $x^e$ couche est de 1 tour.

12. Transformateur matriciel selon la revendication 11, dans lequel un nombre de tours minimum du premier enroulement ou un nombre de tours maximum du premier enroulement fait l'objet d'une rotation entre le sous-enroulement côté haute tension de la première couche et le sous-enroulement côté haute tension de la $n^e$ couche et entre le premier sous-transformateur et un $n^e$ sous-transformateur, et un mode de rotation est l'un des suivants : rotation ordonnée, rotation en ordre inverse ou rotation désordonnée.

13. Convertisseur de puissance, comprenant le transformateur matriciel selon l'une quelconque des revendications 1 à 12 et comprenant en outre un dispositif électronique de puissance et un circuit de commande ;

les deux côtés d'un enroulement côté basse tension du transformateur matriciel étant des dispositifs commandables ; ou un côté de l'enroulement côté basse tension du transformateur matriciel étant un dispositif commandable et l'autre côté étant une diode ; et le dispositif commandable étant commandé par un signal fourni par le circuit de commande ; et
le dispositif électronique de puissance et le circuit de commande étant configurés pour mettre en oeuvre une commande de tension, une commande de courant et une conversion de puissance sur le transformateur matriciel.

14. Convertisseur de puissance selon la revendication 13, le convertisseur de puissance étant l'un quelconque des éléments suivants : un redresseur, un onduleur, un adaptateur de puissance, un convertisseur de fréquence ou un système de gestion de batterie.

15. Procédé d'agencement d'enroulements de transformateur matriciel, comprenant les étapes consistant à :

obtenir une valeur de conception de nombre de tours d'un enroulement côté haute tension d'un transformateur matriciel, le transformateur matriciel comprenant n sous-transformateurs (101-104) et n étant un nombre entier supérieur à 1 ;
lorsqu'il est déterminé qu'un rapport entre la valeur de conception de nombre de tours et n n'est pas un nombre entier, agencer séparément les premiers enroulements sur les colonnes de noyau magnétique des n sous-transformateurs (101-104) sur la base de la valeur de conception de nombre de tours pour permettre à une somme des nombres de tours des premiers enroulements des n sous-transformateurs (101-104) d'être égale à la valeur de conception de nombre de tours, et enrouler séparément les seconds enroulements autour des colonnes de noyau magnétique de tous les sous-transformateurs (101-104) ;
connecter les premiers enroulements des n sous-transformateurs (101-104) en série pour former l'enroulement côté haute tension et connecter les seconds enroulements des n sous-transformateurs (101-104) en parallèle pour former un enroulement côté basse tension du transformateur matriciel ; et
commander un rapport d'inductance magnétique des premiers enroulements des n sous-transformateurs (101-104) pour qu'il soit égal à un rapport de nombre de tours des premiers enroulements des n sous-transformateurs (101-104).

101          102

Change
(3+3+2):3

3:3          3:3

Second winding

First winding

Turn quantity of
the first winding

3:3          2:3

103          104

Turn quantity of the
second winding

FIG. 1

201          202          203

Change
(4+4+3):3

4:3          4:3          3:3

Second winding

First winding

Turn quantity of
the first winding

Turn quantity of the
second winding

FIG. 2

Change
(6+5):3

301          302

6:3          5:3

Second winding

First winding

Turn quantity of
the first winding          Turn quantity of the
second winding

FIG. 3

First pin of a high-          Second pin of the high-
voltage-side winding          voltage-side winding

401          402

6:3:5          5:3:6

First-layer first winding

Second winding

Second-layer first winding

Turn quantity
of the first-
layer first          Turn quantity
winding          of the second
winding          Turn quantity
of the second-
layer first
winding

FIG. 4

First pin of a high-
voltage-side winding

Second pin of the high-
voltage-side winding

501      502      503

4:4:3:3      4:3:4:3      3:4:4:3

Second winding
Third-layer first winding
Second-layer first winding
First-layer first winding

Turn quantity
of the first-
layer first
winding

Turn quantity
of the second
winding

Turn quantity
of the second-
layer first
winding

Turn quantity
of the third-
layer first
winding

**FIG. 5**

| Obtain a turn quantity design value of a high-voltage-side winding of a matrix transformer, where the matrix transformer includes n sub-transformers, and n is an integer greater than 1 | 601 |

| When determining that a ratio of the turn quantity design value to n is not an integer, separately arrange first windings on magnetic core columns of the n sub-transformers based on the turn quantity design value to enable a sum of turn quantities of the first windings of the n sub-transformers to be equal to the turn quantity design value, and separately wind second windings around the magnetic core columns of all the sub-transformers; and connect the first windings of the n sub-transformers in series to form the high-voltage-side winding, and connect the second windings of the n sub-transformers in parallel to form a low-voltage-side winding of the matrix transformer | 602 |

| Control a magnetic inductance ratio of the first windings of the n sub-transformers to be equal to a turn quantity ratio of the first windings of the n sub-transformers | 603 |

**FIG. 6**

Obtain a turn quantity design value of a high-voltage-side winding of a matrix transformer, where the matrix transformer includes n sub-transformers, and n is an integer greater than 1 — 701

When determining that a ratio of the turn quantity design value to n is not an integer, arrange an n-layer first winding around a magnetic core column of an $i^{th}$ sub-transformer in the n sub-transformers according to a first constraint condition and a second constraint condition, where i is any integer in an interval [1, n]; and separately wind second windings around magnetic core columns of all the sub-transformers, where the first constraint condition includes that a turn quantity of an $x^{th}$-layer high-voltage-side sub-winding is equal to the turn quantity design value, and the second constraint condition includes that a sum of turn quantities of first windings of n layers of the $i^{th}$ sub-transformer in the n sub-transformers is equal to the turn quantity design value — 702

Connect $x^{th}$-layer first windings of the n sub-transformers in series to form the $x^{th}$-layer high-voltage-side sub-winding, where x is any integer in the range [1, n]; and connect the second windings of the n sub-transformers in parallel to form a low-voltage-side winding of the matrix transformer. — 703

Connect the first-layer high-voltage-side sub-winding to the $n^{th}$-layer high-voltage-side sub-winding in parallel to form the high-voltage-side winding of the matrix transformer — 704

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **LI BIN et al.** A High-Efficiency High-Density Wide-Bandgap Device-Based Bidirectional On-Board Charger. *IEEE JOURNAL OF EMERGING AND SELECTED TOPICS IN POWER ELECTRONICS,* 01 September 2018, vol. 6, 1627-1636